# EUROPEAN PATENT APPLICATION

(11) **EP 0 907 012 A1**
(43) Date of publication of application: **07.04.1999**
(21) Application number: 96918891.1
(22) Date of filing: 21.06.1996
(51) Int. Cl.: F02B 43/10, F02B 47/02, F02M 21/02, F02M 25/022, C02F 1/30

(54) **INTERNAL COMBUSTION ENGINE USING WATER DECOMPOSITION GAS**

(71) Applicant: World Fusion Limited, Hong Kong (HK)
(72) Inventor: SUGIURA, Tsukasa, Nishikamo-gun, Aichi 470-02 (JP); OSUMI, Yasuaki, Atsugi-shi, Kanagawa 243-02 (JP)
(74) Representative: Gemmell, Peter Alan, Dr.
(86) International application number: JP9601742
(87) International publication number: WO9748892

(57) **Abstract**

An internal combustion engine designed to work by burning water decomposition gas, water and combustion gas that are supplied into a combustion chamber, wherein water decomposition gas obtained by atomizing a water molecular cluster of water supplied into the combustion chamber is made fine with far infrared radiation ceramics and adding to the atomized water a microbial anti-oxidant is used. This configuration enables water whose surface area is increased due to the atomized water molecular cluster being made fine to expand explosively instantly when water decomposition gas is ignited to be burnt, thereby making it possible to produce a large water decomposition gas explosion energy. In addition, since this water contains the added microbial anti-oxidant, it is possible to prevent the corrosion of cylinders and piping.

## Description

### Field of the invention

The present invention relates to an internal combustion engine converting water decomposition gas into energy with high efficiency and worked by water decomposition gas which can be widely used and applied to a desired system employing a principle of a internal combustion engine of a car, ship, locomotive, plant and so on.

### Prior Art

The demand of a new source of energy to be a replacement of oil energy used in a internal combustion engine in the past is more increased due to the reduce of natural resources, the serious condition of air pollution, and global warming by the increase of carbon dioxide.

Various energy sources or resources to be a replacement of oil resource are being searched and studied. One of them, hydrogen gas is an ideal energy source having definitely advantages such as non pollution and a low cost which the present energy resources or sources do not have. Due to these advantages, the search and development for putting an internal combustion engine applying a hydrogen gas into practical use are carried out all over the world.

However, trial internal combustion engines using a hydrogen gas which have been made until the present are not practicable compared with one using oil fuels in view of output and cost. Also, they are far from the step for practical use.

The present invention is developed reconsidering the past problem. The purpose of the present invention is to provide an internal combustion engine which can convert hydrogen gas into energy with high efficiency and is superior in view of a practical use.

### The summary of the Invention

The invention in claim 1 is an internal combustion engine to work by burning water decomposition gas, water, and composition gas which are supplied into a combustion chamber, wherein water molecular cluster of water supplied into said combustion chamber is atomized with far infrared radiation ceramics and the atomised water added a microbial anti-oxidant is used. Water whose surface area is increased due to the atomized water molecular cluster being atomized explosively instantly expands when water decomposition gas is ignited to be burnt, and which makes it possible to produce a large water decomposition gas explosion energy. The produce of nitrogen oxides becomes less due to the structure supplying combustion gas instead of air. In addition, since the water contains the added microbial anti-oxidant, it is possible to prevent the corrosion of cylinders and piping.

The invention in claim 2 is the internal combustion engine employing said combustion gas in claim 1 which interactions a combustion explosion energy of water decomposition gas and a steam energy obtained by evaporating water due to igniting water decomposition gas to be burnt in a combustion chamber in which combustion gas is supplied and into which each of water decomposition gas and water is directly injected. Heat energy produced by igniting water decomposition gas to be burnt and steam energy are interactioned and efficiently converted into mechanical kinetic energy while water whose surface is increased due to water molecular cluster being atomozid instantly explosively expands, thereby which makes it possible to produce a large water decomposition gas explosion energy when water decomposition gas is ignited to be burnt. In addition, it less produces nitrogen oxides since air is not supplied into the combustion chamber.

The invention in claim 3 has excellent far infrared radiation ceramics action and can efficiently atomize a water molecular cluster since it is an internal combustion engine in claim 1 and 2 that employes water decomposition gas and tourmalines which are aforementioned far infrared radiation ceramics.

The invention in claim 4 is the internal combustion engine employing water decomposition gas in claim 1 and 2 wherein a feeder of water decomposition gas comprises water tank and an electrolytic portion provided in said water tank in which far infrared radiation ceramics and a microbial anti-oxidant are added into water. Therefore, it efficiently produces a large amount of water decomposition gas since far infrared radiation ceramics and a microbial anti-oxidant are added in water in the water tank, and dirt is not accumulated in such an electrolystic plate due to the action of said microbial anti-oxidant, and the electrolytic efficiency hardly becomes low in view of cost.

The invention in claim 5 is the internal combustion engine employing water decomposition gas in claim 4 wherein said far infrared radiation ceramics are tourmalines, thereby have a great efficiency of far infrared radiation ceramics and can increase electrolytic efficiency by adding tourumailine which has a water electrolytic action in water.

### Brief Description of Drawings

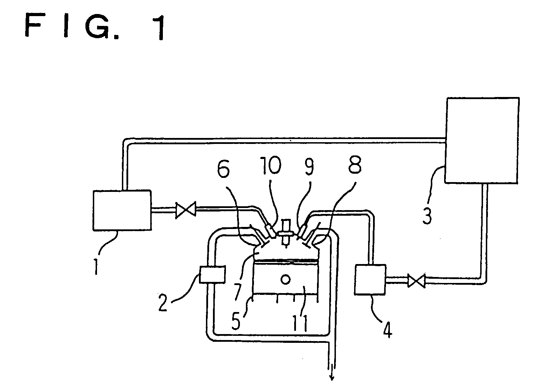

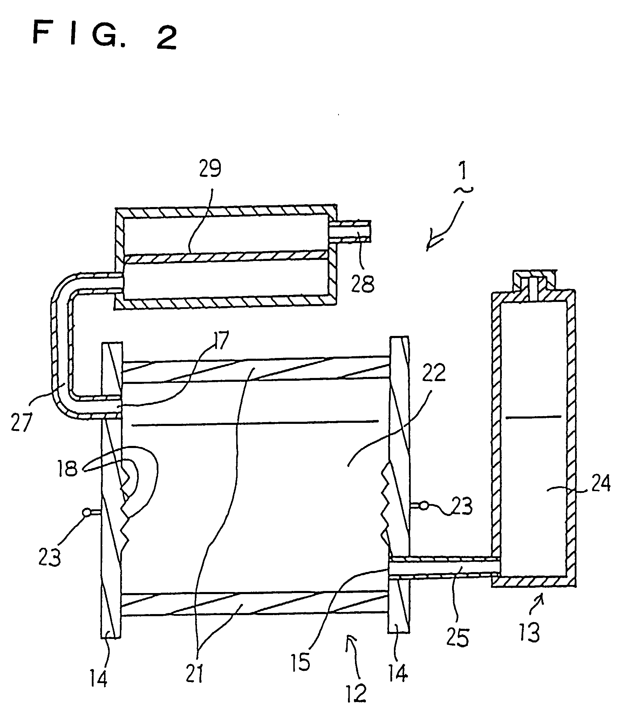

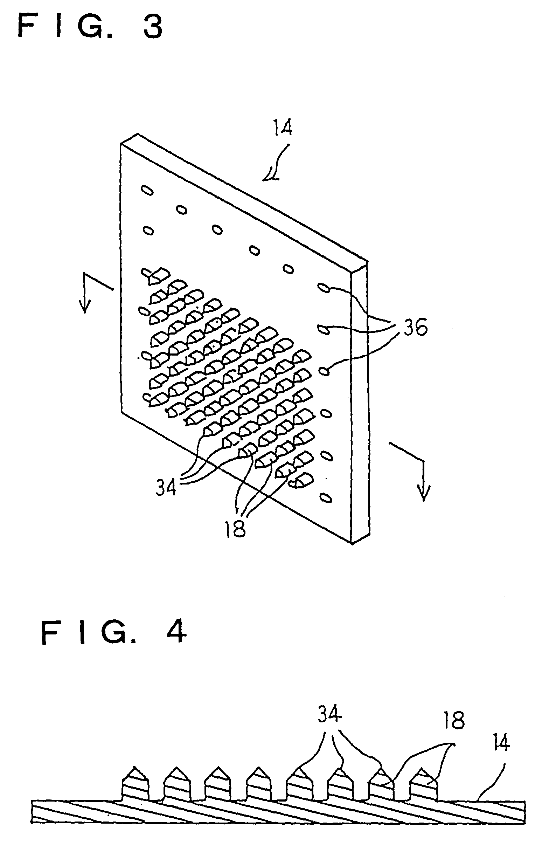

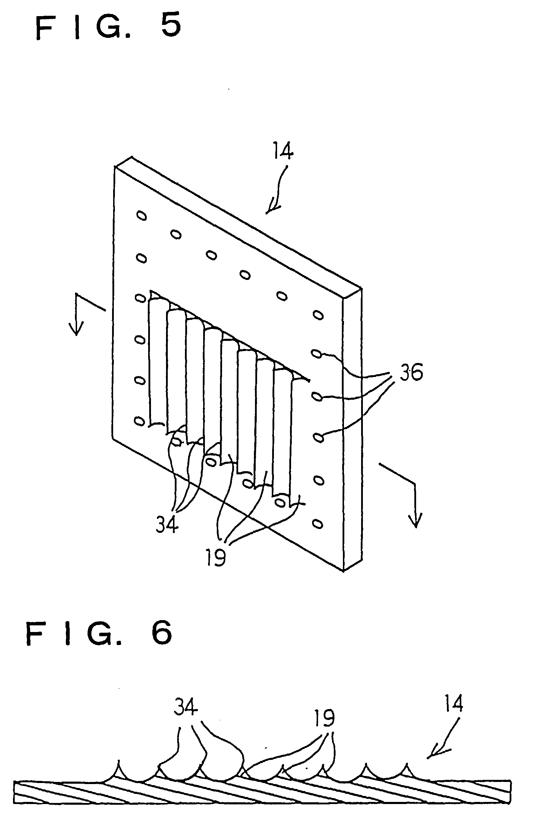

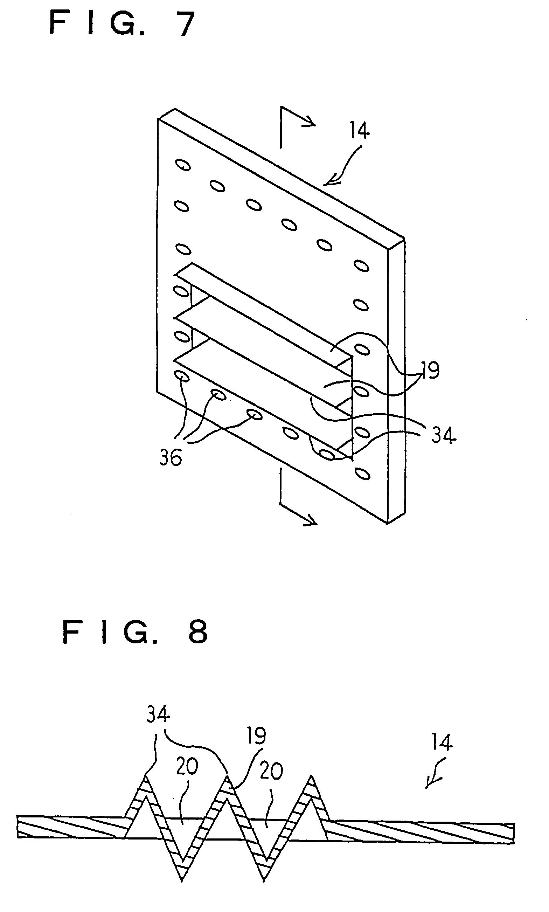

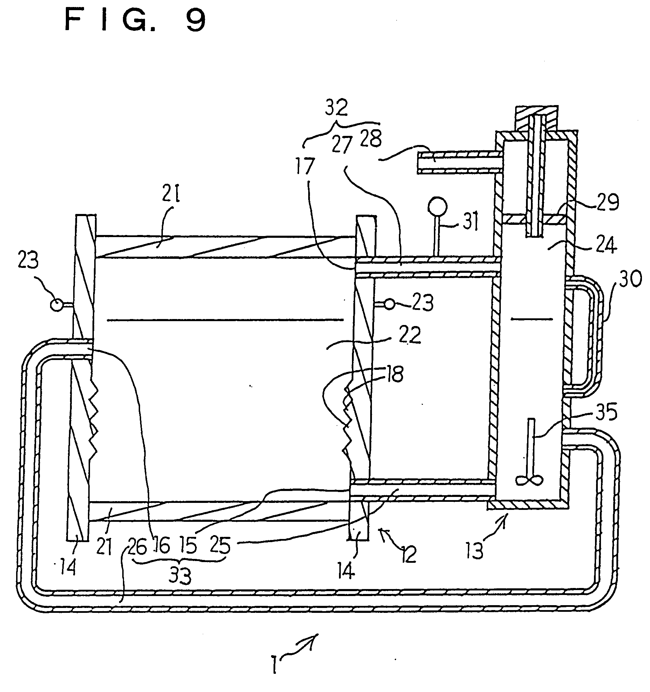

Figure 1 is an outline of schematic diagram of a reciprocating engine using an internal combustion engine employing water decomposition gas related to the present invention, figure 2 is a schematic illustration of a water decomposition gas generator using in the internal combustion engine employing water decomposition gas related to the present invention, figure 3 is a perspective illustration showing an example of an electrolytic plate used in the present invention, figure 4 is a cross-sectional view of the electrolytic plate shown in figure 3. Figure 5 is a perspective view of other examples of an electrolytic plate used in the present invention, figure 6 is a sectional view of the electrolytic plate shown in figure 5. Figure 7 is a perspective illustration of another example of the electrolytic plate used in the present invention, figure 8 is a sectional view of the electrolytic plate shown in figure 7. Figure 9 is a sectional view of the second embodiment of a water decomposition gas generator of the present invention.

### THE BEST MODE OF CARRYING OUT THE INVENTION

The favorable embodiments of the present invention will be explained hereinafter referring to drawings. In drawings, only structures which are necessary for descriptions are shown and the known part as a structure of a reciprocating engine is omitted.

The figure 1 is an outline of a schematic diagram of a reciprocating engine using an internal combustion engine employing water decomposition gas related to the present invention.

Water decomposition gas in the present invention is defined as gas produced by electrolysing water, for example, H₂O, and H₂, O, and OH.

Water decomposition gas is supplied from a water decomposition gas generator 1 into a combustion chamber 7 of a cylinder 5 through a gas supply route by a nozzle 10. Water is directly injected by a jet nozzle 9 from Water tank 3 through a pump 4 into the cylinder 5. And a part of exhaust gas (steam) produced after combustion action in the cylinder 5 is ejected from a exhaust port 8 to an air inlet 6 through a regulator 2 to be supplied into the combustion chamber 7. The rest of water steam is discharged into a muffler (not shown).

Far infrared radiation ceramics are added into the water in the water tank 3 and water molecular cluster of the water in the water tank 3 is atomised with the action of the far infrared radiation ceramics. Therefore, water of which water molecular cluster is atomized is injected into and supplied in said combustion chamber 7.

Thus, by adopting the structure wherein each of water decomposition gas and water is separately and directly injected into a combustion chamber, heat energy produced by igniting water decomposition gas to be burnt is directly converted into mechanical kinetic energy while atomized water in the combustion chamber 7 is instantly converted into steam energy, thereby explosion energy of water decomposition gas and the steam energy are interactioned to be converted into mechanical energy to push down a piston 11.

At this moment, the atomized water whose surface area is increased due to water molecular cluster being atomized is supplied into the combustion chamber 7 so that vital extraordinal energy is obtained by the atomized water explosively instantly expanding when water gas decomposition is ignited to be burnt.

Since only water decomposition gas and combustion gas are taken to be combustioned with no air supply into the combustion chamber 7, poisonous nitrogen oxides is not produced and the present internal combustion engine never pollutes the environment and is desirable to nature.

There is no restriction as to the far infrared radiation ceramics which are added into the water tank 3, and any far infrared radiative ceramics can be used, for example, titanium dioxide, silica, alumina, tourmaline. Especially, tourmaline can be most favorably used. Tourmaline having another name "electric stone" is a kind of a ore produced in Brazil, China, the Ural Mountains, Sri Lanka, California, and Madagascar and so on of which a chemical formula is 3(NaX₃ Al₆(Bo₃)₃Si₆O₁₆(OHF)₄)(in the formula, X is Mg, Fe, Li, Al or the like.)

Alternatively, a structure in which a microbial anti oxidant are added into the water tank 3 may be favorably used in the present invention relating to an internal combustion engine using water decomposition gas.

As the microbial anti oxidant, an enzyme of processed germ, the so-called "EM" (Effective Micro-organism) can be favorably used. "EM" developed by Dr. Teruo Higa of Ryukyu University is a compound culture solution in which about eighty kinds of micro-organism such as lactic acid bacteria, yeast, photosynthetic bacteria and so on are gathered and coexist.

"EM" has known effects such as an improved of soil in the agricultural field, a removal of bad smell of excreta and a decrease of refuse in the stockbreeding field. An anti-oxidant effect is also one of the known effects of "EM."

By adding the enzyme comprising "EM" to the water tank 3, the water added "EM" is supplied into the cylinder 5 so that no stain is attached to the cylinder 5, the water tank 3, pipes and so on, ad filth is not stored. Besides, unlike the present chemical anti-acid, the water added "EM" does not produce a poisonous material in exhaust gas and have a harmful effect in the internal combustion engine system.

In the present invention related to the internal combustion engine, the structure adopting an ultrasonic trembler to work by oscillating with about 20-60 KHz in the water tank 3 may be alternatively used so that atomizing water molecular cluster of water supplied into the combustion chamber is promoted.

The figure 2 is a schematic explanation view showing the first embodiment of the water decomposition gas generator employing a internal combustion engine using water decomposition gas related to the present invention.

The water decomposition gas generator 1 in the figure 2 comprises an electrolytic portion 12 and a tank 13, and obtains water decomposition gas by electrolyzing water. The electroltic portion 12 has spacers 21 whichc are made of insulating material and located between electrolytic plates 14 which is made of conductible materials, and the electrolytic chamber 22 comprising the electrolytic plates 14 and spacers 21 which are fixed by a fixture 36 is formed in the electrolytic portion 12. Water injected from the tank 24 goes to an electrolytic chamber 22 from pouring liquid inlet 15 through a water feeder pipe 25. The feature of a contact side of water in the electrolytic chamber 22 is rugged and an acute-angled part 34 is provided. A part for running electricity 23 is attached to two electrolytic plates 14 by each so that water is electrolyzed by running electricity between the electrolytic plates 14 in the electrolytic chamber 22.

There is no restriction as to the feature of the surfaces of the electrolytic plates 14 as far as the feature of the surface of the electrolytic plates 14 are rugged with the acute-angled part 34, for example, the feature with grooves, projection, dents or the like can be used.

The figure 3 and the figure 4 are respectively a perspective illustration view and a cross-sectional view of the embodiment which is provided many dents 18 on the surface of the electrolytic plates 14. The dents 18 in the embodiment is a feature of a combination of a column and a circular cone. In case that the dents are provided on the surface of the electrolytic plates 14, the dents 18 made on the top of the electrolytic plates 14 are favorably less smaller than ones on the low part. Due to this location, the risk that water decomposition gas produced from the low dents 18 is attached to the top dents 18 is reduced.

The figure 5 and the figure 6 are respectively a perspective view and a cross-sectional view of the electrolytic plates 14 with projections 19 on the surface. If the grooves 20 or the projection 19 are made on the surface of the electrolytic plates 14, the grooves 20 and the projections 19 may favorably extend in up and down directions so that the risk which bubbles of the water decomposition gas produced at the low part of the electrolytic plate 14 attached to the top of the electrolytic plate 14 is reduced. It goes without saying that the electrolytic plates 14 of which the projections 19 and the grooves 20 extending longer in both sides directions are included in the present invention.

The figure 7 and 8 are respectively a perspective view and a cross-sectional view of the electrolytic plate 14 with the projection 19 and grooves 20 which extend longer in both sides directions. In this embodiment, the rugged figure of the surface is fomed by deforming the central part of the electrolytic plate 14.

Alternatively, hollows can be made to keep the surfaces rugged. If hollows are made on the electrolytic plate 14, the depth of the hollows may be favorably smaller than the diameter of the hollows so that the water decomposition gas is hardly stocked in the hollows.

In the present invention, as the area of the surface increased , the rugged features of the surface of the electrolytic plate 14 has an effect to accelerate the speed of the electrolysis so that the quantity of the water decomposition gas increases. Furthermore, the inventors have found that by providing a sharpened portion 34 on a part of the rugged places, the quantity of the water decomposition gas increases. In other words, the sharpened portion 34 has an effect to rapidly electrolyze water.

The tank part 13 of the present invention will be explained based on the figure 2 and figure 9 hereinafter. The figure 9 is a cross-sectional view of the second embodiment of the water decomposition gas generator.

In the tank part 13 used in the first and the second embodiments, water is stocked in the tank 24 to be supplied into the electrolytic portion 12 through the water feeder pipe 25.

A circulating water pipe 26 is attached with the tank part 13 in the second embodiment so that water heated in the electrolytic room 22 is poured into the tank 24 through the circulating water pipe 26.

The tank 24 used in the second embodiment is provided with a blast pipe 27, and an airline 28 on the top of the tank 24 is equipped.

In the present invention, the feature ad the size of the tank 24 is not specifically restricted and can be changed in accordance with the quantity of the water decomposition gas ad so on.

Alternatively, a cooling system and an agitator can be provided with the tank 24.

Furthermore, a level gauge 30 may be favorably provided with the tank 24.

Besides, alternatively, a filter 29 is provided in the tank 24 so that water decomposition gas poured into the tank 24 from a blast pipe 27 passes through the filter 29 and is discharged out from the tank 24 from the airline 28. Because drops of water and the like may be contained in water decomposition gas produced in the electrolytic room 22 owing to a quantity of production of water decomposition gas and the temperature of the electrolytic room 22, the filter 29 may be favorably equipped to catch the drops of water. If the filter 29 is provided in the tank 24, drops of water and the like caught by the filter falls down into in the tank 24 and merge into water sent to the electrolytic room 22 so that water can be electrolyzed and it is not necessary to provide a separate plate to receive drops of water.

It is natural that the water decomposition gas generator 1 without the filter 29 is included in the present invention.

Powder of far infrared radiation ceramics may be favorably dispersed in water to be electrolyzed.

As the reason for the aforementioned, by adding far infrared radiation ceramics into water to be electrolyzed, electrolyzing water by water moecular cluster of the water being atomized by an action discharged from far infrared radiation ceramics is promoted, which makes it possible to gain large water decomposition gas.

There is no restriction as to far infrared radiation ceramics which are added into water to be electrolyzed, as far as they are powder ceramics which discharge far infrared radiation, for example, titanium dioxide, silica, alumina and the like. Especially, tourmaline is most favorably used. This is because tourmaline has an ability to electrolyze water to improve the electrolytic efficiency greatly.

The structure wherein a microbial anti-oxidant is added into water to be electrolyzed may be favorably adopted. By adding a micro anti-oxidant into water to be electrolyzed, no stain is attached to the electrolytic plates so that the electrolytic efficiency can hardly decline as time passes.

Hereinafter, a circulating route 33 of the water decomposition gas generator 1 will be explained based on the figure 9.

The circulating route 33 is a route in which water runs. The circulating route 33 runs from the tank 24 through the water feedr pipe 25, enters the electrolytic portion 12 and returns from the electrolytic portion 12 to the tank 24 through the circulating water pipe 26.

First of all, water is storaged in the tank 24 and sent to the electrolytic portion 12 through the water feeder pipe 25. A part of the water is electrolyzed in the electrolytic portion 12 and the rest of the water which were not electrolyzed runs in the electrolytic portion 12 absorbing heat produced from the electrolytic plates 14, goes out from a circulating water pore (16) through a circulating pipe, and returns to the tank 24.

A part of this circulating route 33 is provided with a driving part 35. There is no restriction as to the driving part 35 and a pump used for delivering water may be favorably used.

In the embodiment shown in the figure 9, an agitator provided in the tank 24 also works as the driving part 35. In other words, the agitator in the embodiment stirs in the low part so that water pushed with the stream made by the agitator circulates in the circulating route 33.

The circulating route 33 has an effect to prevent steam from mixing into water decomposition gas in case that large water decomposition gas is produced. It is necessary that high voltage is run through the electrolytic room 22 in case that large water decomposition gas is produced by the water decomposition gas generator 1, and in this case, the electrolytic plate 14 produces heat so that a temperature of water in the electrolytic room 22 goes up. In the circulating route 33, warm water from the electrolytic room 22 runs and cool water in the tank 24 runs to the electrolytic room 22 so that the increase of the temperature of water in the electrolytic room 22 due to heat produced from the electrolytic plates 14 is prevented and a production of steam is also prevented. In the water decomposition gas generator 1 equipping the circulating route 33, as water steam is not produced after high voltage is run for a long time, it does not mix produced water decomposition gas.

Hereinafter, air outlet 32 will be explained.

Air outlet 32 is a route in which water decomposition gas produced in the electrolytic room 22 runs. In other words, the air outlet 32 is a route which runs from an air outlet 17 in the electrolytic room 22 through an air passage pipe 27, enters from air inlet into the tank 24, runs through an airline 28 and reaches the portion using water decomposition gas.

In the embodiment shown in figure 9, an air inlet in the tank 24 is located above the surface of water, ad if an air inlet in the tank 24 is located under the surface of water, the embodiment of the case is included in the present invention. In case that the air inlet is located under the surface of water, water decomposition gas falls down under water so that water decomposition gas containing drops of water may be caught by water in the tank 24. In this embodiment, a barometer 31 is provided in the air outlet 32.

The air outlet 32 has an effect to stay an amount of water decomposition gas in case that a large amount of water decomposition gas is produced. The air outlet 32 makes the values of atmospheric pressures in both the electrolytic room 22 and the tank 24 equal so that water in the electrolytic room 22 does not flow up stream into the tank 24 if the atmospheric pressure becomes large in the electrolytic room 22 due to the increase of the amount of water decomposition gas. The contact area of the electrolytic plate 14 and water in the electrolytic room 22 does not greatly change so that the amount of water decomposition gas water is stably produced.

The embodiment of the water decomposition gas generator 1 used in the present invention will be explained hereinafter.

Three kinds of water decomposition gas generator which are respectively called "First," "Second" and "Third" are built up and the amount of water decomposition gas, watt consumption, produced gas pressure and water consumption of each generator were measured.

| | | 1st Generator | 2nd Generator | 3rd Generator |
|---|---|---|---|---|
| Measurement | Width | 250 | 470 | 522 |
| | Height | 230 | 740 | 945 |
| | Length | 440 | 715 | 867 |
| Weight( kg ) | | 25 | 120 | 346 |
| Voltage (V) | | 220 | 220 | 380 |
| Production Amount (l/h) | | 200 | 1200 | 2000 |
| Watt Consumption (Kwh) | | 0.66 | 5.5 | 6.6 |
| Pressure (kg/ cm²) | | 1.0 | 0.7 | 1.0 |
| Water Consumption (l/h) | | 0.1 | 0.65 | 1.0 |

As shown on the above, each electrolytic efficiency of 2nd and 3rd water decomposition generators of which amounts of water decomposition gas per hour are large is almost same as one of the 1st water decomposition gas generator. The result of this test shows that the water decomposition gas generator used in the present invention has an ability to produce large amount of water decomposition gas with high efficiency.

A reciprocating engine is explained as an example of the internal combustion engine using water decomposition gas related to the present invention using water decomposition gas on the above, but an internal combustion engine using water decomposition gas related to the present invention is not restricted only the reciprocating engine shown as an example, and it can be employed in any internal combustion engine which can use optional water decomposition gas such as a gas turbine engine, a diesel engine, a jet engine, a rotary engine and the like.

### INDUSTRIAL APPLICABILITY

As shown on the above, the internal combustion engine using water decomposition gas related to the present invention can convert water decomposition gas into energy with high efficiency, never produces harmful nitrogen oxides and can be applied to a optional system using a principle of an internal combustion engine such as used in cars, vessels, locomotives, and plant equipments and so on.

## Claims

1. An internal combustion engine designed to work by burning water decomposition gas, water, and combustion gas supplied into a combustion chamber and characterized in that;
water molecular cluster of water which is supplied into said combustion chamber is atomized with far infrared radiation ceramics; and
a microbial anti-oxidant is added in said combustion chamber.

2. An internal combustion engine using water decomposition gas as set forth in claim (1) characterized in that;
each of water decomposition gas and water is directly injected to the combustion chamber in which combustion gas is taken so that igniting water decomposition gas to be burnt makes water become steam; and
combustion explosive energy of water decomposition gas and steam energy produced by making water become steam are interactioned.

3. An internal combustion engine using water decomposition gas as set forth in claim (1) or (2) characterized in that said far infrared radiation ceramics are tourmalines.

4. An internal combustion engine using water decomposition gas as set forth in claim (1) or charcterized in that;
Water decomposition gas generator comprises a water tank and an electrolytic portion provided in said water tank; and
far infrared radiation ceramics and a microbial anti-oxidant are added in said water tank.

5. An internal combustion engine using water decomposition gas as set forth in claim (4) characterized in that said far infrared radiation ceramics are tourmalines.
